(19) Europäisches Patentamt / European Patent Office / Office européen des brevets

(11) **EP 2 127 116 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(51) Int Cl.:
*H04B 1/707* *(2011.01)*  *H04B 3/54* *(2006.01)*
*H04J 11/00* *(2006.01)*

(21) Anmeldenummer: **07847544.9**

(22) Anmeldetag: **29.11.2007**

(86) Internationale Anmeldenummer:
**PCT/EP2007/063028**

(87) Internationale Veröffentlichungsnummer:
**WO 2008/074607 (26.06.2008 Gazette 2008/26)**

(54) **VERFAHREN ZUM ÜBERTRAGEN VON DATEN EINES DATENSTROMS ÜBER EIN KOMMUNIKATIONSMEDIUM EINES KOMMUNIKATIONSSYSTEMS, SOWIE TEILNEHMER EINES KOMMUNIKATIONSSYSTEMS UND KOMMUNIKATIONSSYSTEM ZUR AUSFÜHRUNG DES VERFAHRENS**

METHOD FOR TRANSMISSION OF DATA IN A DATA STREAM VIA A COMMUNICATION MEDIUM IN A COMMUNICATION SYSTEM, AS WELL AS SUBSCRIBER TO A COMMUNICATION SYSTEM, AND COMMUNICATION SYSTEM FOR CARRYING OUT THE METHOD

PROCÉDÉ DE TRANSFERT DE DONNÉES D'UN FLUX DE DONNÉES PAR UN SUPPORT DE COMMUNICATION D'UN SYSTÈME DE COMMUNICATION AINSI QU'ABONNÉS D'UN SYSTÈME DE COMMUNICATION ET SYSTÈME DE COMMUNICATION QUI PERMET L'EXÉCUTION DU PROCÉDÉ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.12.2006 DE 102006059689**

(43) Veröffentlichungstag der Anmeldung:
**02.12.2009 Patentblatt 2009/49**

(73) Patentinhaber: **Robert Bosch GmbH**
**70442 Stuttgart (DE)**

(72) Erfinder:
• **LUCAS, Rainer**
**74321 Bietigheim-Bissingen (DE)**
• **HUCK, Thorsten**
**76477 Elchesheim-Illingen (DE)**

(56) Entgegenhaltungen:
**EP-A- 1 289 164    WO-A1-92/02094**
**US-A- 5 355 389    US-A1- 2002 167 928**

EP 2 127 116 B1

## Beschreibung

Die vorliegende Erfindung betrifft ein Verfahren zum Übertragen von Daten eines Datenstroms über ein Kommunikationsmedium eines Kommunikationssystems in Zeitschlitzen von sich wiederholenden Kommunikationszyklen. Die Erfindung betrifft außerdem einen Teilnehmer eines Kommunikationssystems zur Übertragung von Daten in Zeitschlitzen von sich wiederholenden Kommunikationszyklen. Das Kommunikationssystem umfasst ein Kommunikationsmedium, den Teilnehmer und mindestens einen weiteren Teilnehmer, wobei die Teilnehmer zum Zwecke der Datenübertragung an dem Kommunikationsmedium angeschlossen sind. Schließlich betrifft die Erfindung ein Kommunikationssystem zur Übertragung von Daten in Zeitschlitzen von sich wiederholenden Kommunikationszyklen, umfassend ein Kommunikationsmedium mit mehreren daran angeschlossenen Teilnehmern.

Stand der Technik

Das derzeit im Automobil häufig angetroffene CAN (Controller Area Network)-Protokoll wird in absehbarer Zeit an seine Grenzen stoßen. Insbesondere bei den Echtzeitanforderungen und der Sicherheitsrelevanz aufkommender x-by-wire Applikationen hat das CAN-Protokoll Schwächen. Zur Überwindung dieser Einschränkungen, hinsichtlich der speziellen Erfordernisse in einem Kraftfahrzeug, wurde das FlexRay-Protokoll im Rahmen eines Konsortiums entwickelt FlexRay ist ein serielles, deterministisches und fehlertolerantes Bussystem, welches die erhöhten Anforderungen zukünftiger Vernetzungen, insbesondere höhere Bandbreiten der Datenübertragung, Echtzeitfähigkeit und Ausfallsicherheit (für x-by-wire-Systeme), im Kraftfahrzeug erfüllt.

Bei der Entwicklung von FleyRay standen bei den Anforderungen vor allem eine hohe Datenübertragungsrate, eine deterministische Kommunikation, eine hohe Fehlertoleranz und Flexibilität im Vordergrund. Bei dem FlexRay-Protokoll erfolgt die Informationsübertragung in Zeitschlitzen von aufeinander folgenden Kommunikationszyklen. In den elektrischen Komponenten (Netzwerkknoten) ist ein gemeinsames Zeitverständnis vorhanden, wobei die Komponenten durch Referenznachrichten (sogenannte SYNC-Nachrichten) innerhalb eines Zyklus synchronisiert werden. Um sowohl eine synchrone als auch eine asynchrone Nachrichtenübertragung zu ermöglichen, ist der Kommunikationszyklus in einen statischen Teil (static segment) und in einen dynamischen Teil (dynamic segment) unterteilt, die jeweils mindestens einen Zeitschlitz (Slot oder Timeslot) zur Informationsübertragung aufweisen.

Die Slots des statischen Teils sind bestimmten Nachrichten zugewiesen, die periodisch ohne Wettbewerb um die Zugriffsrechte auf die FlexRay-Datenbusstruktur zu bestimmten Zeitpunkten übertragen werden. Während im statischen Teil des Zyklus nach dem Time Division Multiple Access (TDMA)-Verfahren auf die FlexRay-Datenbusstruktur zugegriffen wird, wird während des dynamischen Teils des Zyklus nach dem sogenannten Flexible Time Division Multiple Access (FTDMA)-Verfahren auf die Busstruktur zugegriffen. Zum Zugriff auf die Datenbusstruktur während des dynamischen Segments des Zyklus wird ein sogenanntes Minislotting-Verfahren eingesetzt. Für das FlexRay-Protokoll ist derzeit die Spezifikation v.2.1 maßgebend. Hier eventuell beschriebene Einzelheiten des Protokolls könnten sich in Zukunft also ändern. Weitere Informationen über das FlexRay-Protokoll können dem Internet unter http://www.flexray.de entnommen werden, wo unter anderem eine Vielzahl von Veröffentlichungen für jedermann zugänglich abgelegt sind.

Bei einer näheren Betrachtung eines Kraftfahrzeugs erkennt man eine Vernetzung verschiedener Systeme mit unterschiedlichen Eigenschaften. Verteilte Regelungssysteme verlangen so meist eine zyklische, zeitsynchrone Übertragung. Alle nicht ständig benötigten Daten, zum Beispiel aus Ka rosserie- und Komfortanwendungen bzw. Diagnosedaten, lassen sich dagegen vorteilhafter asynchron übertragen. Um ein deterministisches Verhalten zu ermöglichen, ist bei FlexRay das Übertragungsschema nach Zyklen organisiert. Jeder Kommunikationszyklus gliedert sich in ein statisches und ein dynamisches Segment von konfigurierbarer Länge. Innerhalb des statischen Segments sind jedem Netzknoten bestimmte Zeitfenster (Slots) zugeteilt, in denen die Nachrichten des Teilnehmers zu festen Zeitpunkten übertragen werden. Die definierten Sendezeiten der zugewiesenen Slots garantieren eine deterministische Übertragung der Daten. Im dynamischen Segment des Zyklus erfolgt die Zuteilung der Bandbreite prioritätsgesteuert, d.h. Nachrichten mit hoher Priorität werden garantiert innerhalb eines Kommunikationszyklus übertragen, während sich für Nachrichten mit niedriger Priorität der Sendezeitpunkt verzögern kann.

Echtzeit-relevante und zeitkritische Nachrichten werden vorzugsweise im statischen Segment übertragen. Das dynamische Segment ist dagegen besser geeignet für die Übertragung von Daten mit geringeren Echtzeit-Anforderungen. Da diese Daten nicht in jedem Kommunikationszyklus übertragen werden müssen, können die Netzknoten die zur Verfügung stehende Bandbreite im dynamischen Segment gemeinsam nutzen. Dadurch wird der insgesamt benötigte Bandbreitenbedarf geringer; durch Verkürzung des Kommunikationszyklus können schnellere Wiederholraten erreicht oder die Baudrate reduziert werden.

Aufgrund der flexibel festlegbaren Grenze zwischen statischem und dynamischem Segment ist auch ein rein statischer bzw. rein dynamischer Betrieb möglich, was für FlexRay ein breites Einsatzspektrum eröffnet. Im rein dynamischen Betrieb wird die Kommunikationsrunde in der Regel zyklisch von einem Masterknoten gestartet. FlexRay bietet zusätzlich die Möglichkeit, den Kommunikationszyklus durch ein externes Ereignis zu starten (event triggered).

Speziell für dieses neuartige Protokoll wurde ein alternatives Kommunikationsmedium (Physical Layer) entwickelt. Dieses sieht eine integrierte Übertragung von Daten und Energie auf einem gemeinsamen Medium vor. Hierbei spricht man von hochdatenratiger Powerline Communications (HDR-PLC). Im Gegensatz zu herkömmlichen PLC-Systemen aus dem Hausbereich, bei denen auf eine bestehende Infrastruktur zurückgriffen wird, kommt im Falle der HDR-PLC ein modifizierter (bzw. konditionierter) Kabelbaum zum Einsatz, der eine nahezu ideale Übertragungsfunktion bereitstellt. Dies ermöglicht einen kostengünstigen Aufbau der Transceiver, da auf eine aufwendige Empfängerstruktur (z.B. Entzerrer) verzichtet werden kann.

Aus der DE 101 42 409 ist eine Powerline Communications im Kraftfahrzeug bekannt. Insbesondere ist dort der Aufbau und die Ausgestaltung eines konditionierten Kabelbaums beschrieben. Aus der DE 101 42 408 ist der Einsatz Powerline Communications als redundanter Datenbus bekannt. Aus der DE 10 2004 008 910 ist die Nutzung einer Powerline Communications zur redundanten Informationsübertragung in einem Flex-Ray-Kommunikationssystem beschrieben.

Offenbarung der Erfindung

Ausgehend von dem beschriebenen Stand der Technik liegt der vorliegenden Erfindung die Aufgabe zugrunde, eine möglichst kostengünstige Möglichkeit zu schaffen, die Bandbreite eines Kommunikationssystems, in dem Daten in Zeitschlitzen von wiederkehrenden Kommunikationszyklen übertragen werden, besser als bisher auszulasten.

Zur Lösung dieser Aufgabe wird ausgehend von dem Verfahren gemäß dem Oberbegriff des Anspruchs 1 vorgeschlagen, dass die Daten des Datenstroms vor dem Senden mittels einer bestimmten Codesequenz spektral gespreizt und die gespreizten Daten dann in den Zeitschlitzen der sich wiederholenden Kommunikationszyklen übertragen werden.

Erfindungsgemäß wird also eine Erweiterung des FlexRay TDMA-Systems um ein sog.

Code Division Multiple Access (CDMA) Verfahren, vorzugsweise um ein Direct-Sequence (DS)-CDMA Verfahren, vorgeschlagen. Der Einsatz im Rahmen einer Powerline Commuications in einem Kraftfahrzeug wird durch die hohe Güte des konditionierten Kommunikationskanals ermöglicht. Das erfindungsgemäße Kommunikationssystems wird der Spezifikation und den Anforderungen an ein modernes Kommunikationssystem gerecht. Hinsichtlich der kritischen Randbedingungen diverser EMV-Richtlinien, ist es vorteilhaft, dass die Signalenergie auf ein breiteres Spektrum verteilt wird, und somit in den einzelnen Spektralbereichen mühelos die gesetzlichen Grenzwerte einhalten kann. Neben dem speziellen Einsatz in einem hochdatenratigen PLC-System stellt dieses Konzept eine prinzipiell interessante Perspektive für FlexRay-Systeme jeglicher Art dar, da es eine zeitsynchrone Übertragung mehrerer Nachrichten von verschiedenen Teilnehmern in einem Zeitschlitz je Kanal ermöglicht. Ein Zeitschlitz gemäß der FlexRay-Spezifikation wird gewissermaßen aufgeteilt in eine Mehrzahl an virtuellen Zeitschlitzen, in denen die einzelnen Nachrichten übertragen werden.

Mit dem dargelegten Konzept ist es möglich eine einfache, sowie sehr effiziente bzw. kostengünstige Erweiterung des FlexRay Systems, insbesondere eines HDR-PLC FlexRay-Systems, vorzunehmen und dabei das System weitaus besser auszulasten. Mit der Erfindung lässt sich eine Erweitung des Datentransfers auf recht einfache Weise realisieren, indem der vorgegebene Kanal noch besser ausgelastet wird. Bei FlexRay ist ein Kanal bspw. für bis zu 10 MBit/s-Verbindungen ausgelegt. Das erlaubt eine Spreizung von 1 MBit/s-Verbindungen um den Faktor 10. Zudem kann durch eine Aufspreizung des Informationssignals auf einen weiten Frequenzbereich die EMV-Richtlinien eingehalten werden. Durch die Spreizung wird die Energie eines Informationssymbols über einen großen spektralen Bereich verteilt. Entsprechend kann man nun bei einem PLC-System auch das FlexRay-Signal auf dem Bordnetz "verstekken", um die am Versorgungsnetz angeschlossenen Teilnehmer im Kraftfahrzeug nur einer minimalen Beeinflussung auszusetzen. Weiter könnte man durch Überlagerung mehrerer solcher FlexRay-Subsysteme, die sich nur durch die Nutzung unterschiedlicher teilnehmerspezifischer Code-Sequenzen unterscheiden, eine zeitsynchrone Übertragung von Nachrichten im gleichen Frequenzbereich auf der Powerline erzielen.

Kurze Beschreibung der Zeichnungen

Weitere Merkmale, Vorteile und Ausführungsformen der Erfindung werden nachfolgend anhand der Figuren näher erläutert. Es zeigen:

Figur 1   ein FlexRay-Kommunikationssystem gemäß einer bevorzugten Ausführungsform der Erfindung, mit einem als Energieversorgungsleitungsstruktur physikalischen Medium;

Figur 2   ein Ablaufdiagramm zur Erläuterung der Direct-Sequence Bandspreizung; und

Figur 3   eine schematische Ansicht eines erfindungsgemäßen Kommunikationssystems.

Ausführungsform(en) der Erfindung

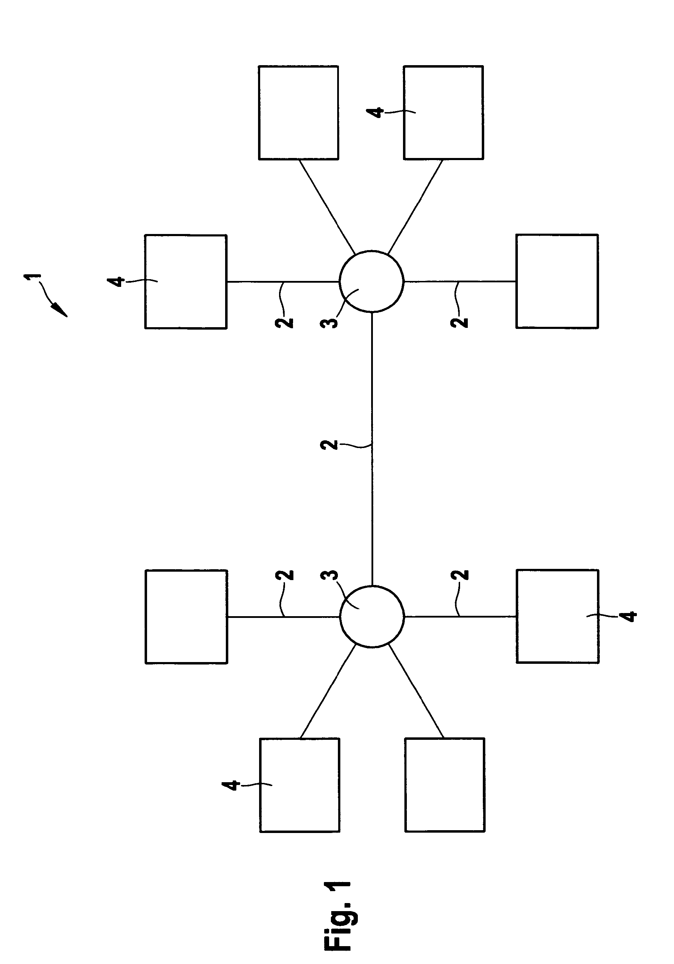

In Figur 1 ist ein erfindungsgemäßes Kommunikationssystem gemäß einer bevorzugten Ausführungsform in seiner Gesamtheit mit dem Bezugszeichen 1 bezeichnet. Das System 1 umfasst ein Kommunikationsmedium 2, das bspw. als eine oder mehrere Datenübertragungsleitungen, eine oder mehrere Funkverbindungen oder als eine oder mehrere optische Verbindungen (z.B. Infrarotverbindungen) oder ähnliches ausgebildet sein kann. Das Kommunikationsmedium 2 verfügt über zwei aktive Sternkoppler 3, welche dem Medium 2 eine Sternstruktur geben. Außerdem umfasst das Kommunikationssystem 2 mehrere Teilnehmer 4, von denen in der Figur lediglich acht beispielhaft dargestellt sind. Die Teilnehmer 4 sind zum Zwecke der Datenübertragung untereinander an das Kommunikationsmedium 2 angeschlossen. Die Daten werden in dem dargestellten Kommunikationssystem 1 nach einer FlexRay-Protokollspezifikation, vorzugsweise nach der derzeit aktuellen Spezifikation V.2.1, übertragen. Dabei werden die Daten nach dem TDMA (Time Divisional Multiple Access)-Verfahren in Zeitschlitzen eines sich wiederholenden Kommunikationszyklus übertragen. Selbstverständlich umfasst die Erfindung auch Kommunikationssysteme, in denen die Daten nach einer anderen Protokoll-Spezifikation übertragen werden, welche für eine Datenübertragung in Zeitschlitzen von wiederkehrenden Kommunikationszyklen, insbesondere für eine Datenübertragung nach dem TDMA-Verfahren, sorgt. Insbesondere umfasst die Erfindung auch Kommunikationssysteme, in denen die Daten nach einer zukünftigen, weiterentwickelten FlexRay-Spezifikation übertragen werden.

Gemäß derzeit aktueller FlexRay-Spezifikation ist in einem statischen Segment des Kommunikationszyklus jedem Teilnehmer 4 bzw. jeder Nachricht oder Botschaft ein bestimmter Zeitschlitz zugewiesen. Auf diese Weise kann eine deterministische Datenübertragung realisiert werden, was insbesondere für sicherheitsrelevante Anwendungen von großer Bedeutung ist. Zusätzlich ist ein dynamisches Segment in dem Kommunikationszyklus vorgesehen, welches eine ereignisgesteuerte Datenübertragung erlaubt, wobei sich die Reihenfolge der Datenübertragung nach der Bedeutung bzw. Priorität der Botschaften bzw. Nachrichten richtet. Hochpriore Botschaften werden zeitnah, niederpriore Botschaften etwas später, unter Umständen sogar erst in einem nachfolgenden Zyklus, übertragen.

In der vorliegenden Ausführungsform wird als Kommunikationsmedium 2 eine Energieversorgungsleitungsstruktur genutzt, über welche die Teilnehmer 4 mit Energie versorgt werden. Die Nutzung einer Energieversorgungsleitungsstruktur sowohl für die Versorgung der Teilnehmer 4 mit Energie als auch zur Datenübertragung zwischen den Teilnehmern 4 wird auch als Powerline Communications (PLC) bezeichnet. Beim Einsatz des Kommunikationssystems 1 in einem Kraftfahrzeug kann zur Realisierung einer PLC als Kommunikationsmedium 2 der Kabelbaum des Fahrzeugs genutzt werden. Dabei ist es vorteilhaft, wenn der Kabelbaum in besonderer Weise ausgestaltet und an die Datenübertragung angepasst ist So können bspw. Maßnahmen ergriffen werden, durch welche die Eingangsimpedanz der einzelnen im Sternkoppler 3 eingehenden Zweige auf einen bestimmten Wert eingestellt wird. Ein solcher Kabelbaum wird auch als modifizierter oder koniditionierter Kabelbaum bezeichnet. Ein konditionierter Kabelbaum stellt eine nahezu ideale Übertragungsfunktion zur Verfügung. Ein entsprechender für die Nutzung als physikalische Schicht eines FlexRay-Kommunikationsmediums 2 modifizierter Kabelbaum ist bspw. in der

DE 10142 409 und insbesondere in der DE 101 42 410 im Detail beschrieben. Über einen derart konditionierten Kabelbaum können Daten ohne größere Störungen und mit einer relativ hohen Datenrate übermittelt werden. Deshalb wird diese Art der Datenübertragung auch als HDR (High Data Rate)-PLC bezeichnet.

Zur besseren Auslastung des in dem Kommunikationsmedium 2 bzw. gemäß FlexRay-Spezifikation zur Verfügung stehenden Frequenzbereichs wird erfindungsgemäß vorgeschlagen, das FlexRay-Kommunikationssystem 1 dahingehend zu erweitern, dass die zu übertragenden Daten vor dem Versenden mittels einer bestimmten Codesequenz spektral zu spreizen und die gespreizten Daten dann in den Zeitschlitzen der sich wiederholenden Kommunikationszyklen zu übertragen. In jedem Zeitschlitz können dadurch mehrere Nachrichten, die auch von verschiedenen Teilnehmern 4 stammen können, gleichzeitig übertragen werden, wobei jede der in dem gleichen Zeitschlitz übertragenen Daten mit einem speziellen Code kodiert wurde, mit dem die Daten beim Empfänger identifiziert, das heißt einem bestimmten sendenden Teilnehmer zugeordnet, und dekodiert werden können.

Das Spreizen der Daten bedeutet, dass bspw. eine Bitdauer von 100 ns, wie sie bei FlexRay vorliegt, um einen bestimmten Faktor verkürzt wird, so dass sich am Beispiel des Faktors 10 beim sendenden Teilnehmer und beim empfangenden Teilnehmer einen Verarbeitungsrate von 100 MBit ergibt, wohingegen die Übertragungsrate nach wie vor bei 10 MBit bleibt. Die Energie eines Datensymbols wird über einen großen spektralen Frequenzbereich verteilt, so dass mit der Erfindung die EMV-Richtlinien besser eingehalten werden können. Realisiert wird die Erfindung dadurch, dass der Datenstrom beim sendenden Teilnehmer mit einer Codesequenz multipliziert wird.

Vorzugsweise wird zum Spreizen des Datenstroms ein CDMA (Code Division Multiple Access) Verfahren eingesetzt. Die Gegenüberstellung von unterschiedlichen CDMA Systemen erfolgt im Hinblick auf eine mögliche Anwendung im Automotive Bereich zur kostengünstigen Erweiterung einer FlexRay-basierten Kommunikation. Aus dem Stand der Technik an sich ekannt sind DS (Direct-Sequence), FH (Frequency-Hopping) und TH (Time-Hopping) CDMA Systeme. Time-Hopping CDMA Systeme spielen keine Rolle bzw. bieten kaum Vorteile bei dem schon bestehenden TDMA-FlexRay-System. Die beiden verbleibenden CDMA Systeme bieten aber bezüglich der Übertragungsqualität und der Frequenzökonomie deutliche Vorteile gegenüber den klassischen FDMA und TDMA Systemen.

Zwar versprechen FH-CDMA Systeme einen höheren Prozessgewinn und eine geringere Aquisitionszeit. Sie sind allerdings in ihrer Leistungsfähigkeit stark von der Leistungsfähigkeit des verwendeten Frequenzgenerators abhängig. Dieser wird für eine Anwendung in FH-CDMA Systemen aufgrund der geforderten extrem hohen Umschaltgeschwindigkeit sehr komplex ausfallen und hohe Kosten verursachen. Daher sind FH-CDMA Systeme für den Einsatz in einem Kraftfahrzeug nur von geringem Interesse.

Im Gegensatz dazu zeichnen sich DS-CDMA Systeme durch ihre vergleichsweise einfache Implementierbarkeit aus. Die benötigten Codegeneratoren sind durch Schieberegister-Schaltungen einfach und kostengünstig realisierbar und erfordern keine komplexe Hardware. Zudem zeichnen sie sich durch eine einfache Empfängerstruktur aus, die in den AKF (Autokorrelationsfunktion)-Eigenschaften der verwendeten Codesequenzen begründet ist. Daher wird bei der vorliegenden Erfindung vorzugsweise ein solches DS-CDMA System verwendet.

Spread Spectrum Systeme (Bandspreizübertragungssysteme) bilden die Grundlage des CDMA Verfahrens. Kennzeichen der Spread Spectrum Technik ist, dass die Signale über einen großen Frequenzbereich gespreizt und sie mit wesentlich größerer Bandbreite gesendet werden, als der ihrer ursprünglichen Datenrate entsprechenden.

Man unterscheidet im Allgemeinen zwischen DS, FH und TH Spread-Spectrum Verfahren, sowie diversen Hybrid Formen. Zur Umsetzung innerhalb eines High-Speed PLC Systems in einem Kraftfahrzeug ist speziell die DS Bandspreizung von Interesse, auf die nachfolgend näher eingegangen wird.

Bei der DS Bandspreizung wird ein binäres Datensymbol direkt mit einer hochratigen, binären Codesequenz der Periode N multipliziert (die einzelnen Bits der Codesequenz werden Chips genannt). Die Multiplikation erfolgt dabei. so, dass ein Datensymbol genau mit einer Periode der Chip-Sequenz multipliziert wird. Für den Zusammenhang zwischen Datensymboldauer $T_b$ und Chipdauer $T_c$ gilt somit:

$$T_b = N \cdot T_c$$

Durch diese Multiplikation wird das resultierende Symbol breitbandig im Vergleich zum ursprünglichen Datensymbol, da die Bandbreite des Datensymbols $B_b = 1/T_b$ sehr viel kleiner ist als die Chipbandbreite $B_c = 1/T_c$. Für die resultierende Bandbreite $B_{DS}$ gilt dann ungefähr:

$$B_{DS} \approx B_c >> B_b$$

Das Datensignal wird also spektral gespreizt.

Damit lässt sich der Prozessgewinn eines DS-CDMA Systems definieren:

$$G_p = \frac{B_{DS}}{R_b} = \frac{T_b}{T_c} = N$$

mit $R_b = 1/T_b$, der Datenrate des Signals.

Das Signal-zu-Rauschverhältnis (S/N) ist definiert durch das Verhältnis aus der empfangenen Signalenergie des gewünschten Signals zu der Gesamtstörleistung. Damit gilt für das S/N in DS Systemen, wenn nur Gaußsches Rauschen berücksichtigt wird:

$$\frac{S}{N} = \frac{E_b}{N_O} \cdot \frac{1}{G_P}$$

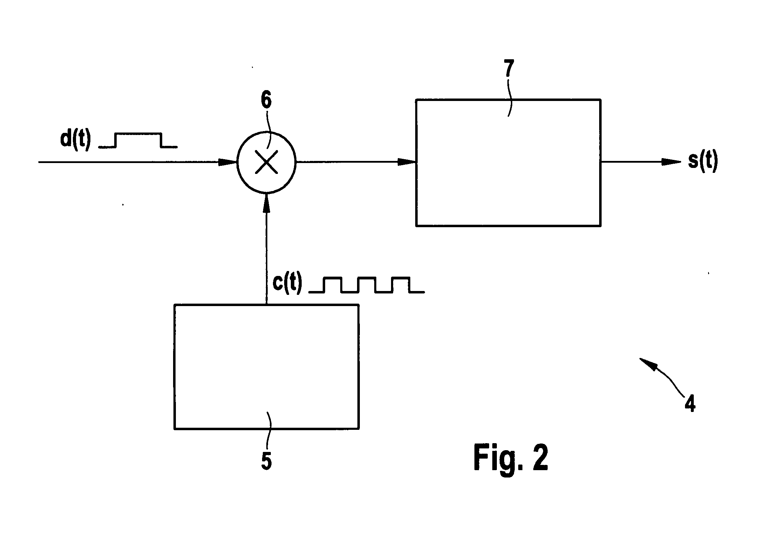

Es ist offensichtlich, dass ein solches aufgespreiztes Signal die Signalenergie über einen weiten Frequenzbereich verteilt. Figur 2 zeigt den prinzipiellen Aufbau einer DS Bandspreizung. Die BPSK (Binary Phase Shift Keying) Modulation ist dabei als beispielhaft anzusehen und entspricht dem DBPSK (Differential Binary Phase Shift Keying)-Verfahren des Automotive PLC-Systems 1. Prinzipiell können auch höherwertige Modulationsverfahren, wie bspw. QPSK (Quadrature Phase Shift Keying) oder 8-PSK, eingesetzt werden. Der von dem Teilnehmer 4 über das Kommunikationsmedium 2 zu übertragende Datenstrom ist mit d(t) bezeichnet. In einem Codegenerator 5 wird eine Codesequenz c(t) generiert, mit der der Datenstrom d(t) in einem Multiplikationspunkt 6 multipliziert wird. In dem BPSK-Modulator 7 wird das aus der Multiplikation resultierende Signal moduliert. Aus Ausgangssignal des Modulators 7 ergibt sich s(t) = A · d(t) · c(t) · cos($\omega_c$t + Φ). Die Chiprate $R_c = 1/T_c$ ist deutlich größer als die Datenrate $R = 1/T_b$.

Entsprechend dem Aufbau eines FlexRay-Systems 1 greift eine Vielzahl von Teilnehmern 4 auf ein identisches Medium 2 (Physical Layer) und einen identischen Frequenzbereich (im Falle des Aufbaus eines HDR-PLC-Systems, insbesondere des konditionierten Kanals) zu. Zur Vermeidung von Kollisionen der Nachrichten auf dem Kanal arbeitet das FlexRay-Protokoll nach dem Time Division Multiple Access (TDMA) Verfahren zur Lösung des Vielfachzugriffsproblems. Diese Lösung benötigt eine globale Systemzeit, auf die sich die diversen Teilnehmer 4 synchronisieren müssen und dann in zugewiesenen disjunkten (virtuellen) Zeitschlitzen senden können.

Falls ein Frequency Division Multiple Access (FDMA)-Verfahren zur Erweiterung des FlexRay-Kommunikationssystems 1 verwendet werden soll, ist eine Erweiterung des Systems 1 auf analoger Seite erforderlich. Insbesondere sind hochgenaue und damit teure Frequenzgeneratoren erforderlich, welche die entsprechenden Trägerfrequenzen bereitstellen können. Eine Alternative zur Erweiterung des Systems auf analoger Seite, welche einen zeitsynchronen Betrieb von mehreren Subsystemen (Teilnehmern 4) auf einem identischem Medium 2 im gleichen Frequenzbereich und auf dem gleichen Kanal ermöglicht, wird erfindungsgemäß vorgestellt Der Vorteil ist hierbei, dass der analoge Teil des bisherigen Transceiverentwurfs im wesentlichen unverändert genutzt werden kann. Lediglich in Bereich der digitalen Signalverarbeitung kommen noch einige wenige Erweiterungen hinzu, die aber hinsichtlich der Kosten gegenüber den analogen Komponenten des Systems vernachlässigbar gering sind.

Bei dem erfindunsgemäßen Verfahren zur Kanaltrennung handelt es sich um das Code Division Multiple Access (CDMA)-Verfahren. Dieses beruht auf der weiter oben beschriebenen Spread Spectrum Technik, unter Nutzung des Direct-Sequence (DS) Bandspreizverfahrens. Jedem Teilnehmer 4 eines solchen Systems 1 wird eine Codesequenz zur spektralen Spreizung zugewiesen. Die Spread Spectrum Technik lässt sie sich vorteilhaft in Multi-User Kommunikationssystemen 1 verwenden, indem durch die Verwendung orthogonaler bzw. quasi-orthogonaler Codesequenzen zur spektralen Spreizung unterscheidbare Signale konstruiert werden. Jedem Teilnehmer 4 eines solchen Systems 1 wird dann ein so konstruiertes Signal zugewiesen.

Somit ergibt sich folgende Definition eines CDMA Systems zur Erweiterung eines FlexRay-Systems 1, insbesondere eines HDR-PLC Systems:

Eine Vielzahl von Teilnehmern 4 spreizen ihre Signale spektral und senden diese zur gleichen Zeit im gleichen Frequenzband. Die Separation der einzelnen Teilnehmer 4 bzw. der durch sie übertragenen Signalströme erfolgt durch Verwendung geeigneter Code-Sets, mittels derer orthogonale bzw. quasi-orthogonale Signale erzeugt werden. Somit ermöglichen diverse FlexRay-Subsysteme die synchrone Übertragung von Informationen auf dem Kommunikationsmedium 2 bzw. den Versorgungsleitungen im Kraftfahrzeug.

Wesentlicher Unterschied zu den angesprochenen klassischen Multiple-Access Verfahren ist, dass weder eine Orthogonalität im Frequenz- noch im Zeitbereich zur Unterscheidung der Signale gefordert ist. So können alle Teilnehmer 4 eines Systems 1 zur gleichen Zeit im gleichen Frequenzband senden.

Code-Sets, die in einem Direct-Sequence CDMA System Anwendung finden sollen, müssen im wesentlichen folgende Eigenschaften besitzen:

- Gute Autokorrelationseigenschaften: Diese sind notwendig zur Schätzung der Kanalimpulsantwort in einem Direct-Sequence CDMA Empfänger und für eine schnelle und sichere Anfangssynchronisation (Aquisition).

- Gute Kreuzkorrelationseigenschaften: Diese sind notwendig, um die gegenseitigen Störungen der einzelnen Teilnehmer 4 gering zu halten (geringes Nebensprechen); die gegenseitigen Störungen sollen als zusätzliches Rauschen interpretiert werden können.

- Genügend großes Code-Set (ausreichende Anzahl an unterschiedlichen Codes): Dies ist für eine Anwendung in einem Kommunikationssystem im Automotivebereich wichtig, da eine große Anzahl von Teilnehmern 4 mit ihrer Hilfe versorgt werden soll (Faustregel: Mächtigkeit des Code-Sets ≈ Bandspreizfaktor).

All diese Eigenschaften werden im Wesentlichen von sogenannten SchieberegisterSequenzen erfüllt. Somit wird bei der beschriebenen Direct-Sequence Bandspreizung im Multiplikationspunkt 6 zunächst ein Datensymbol mit der Periode einer Codesequenz multipliziert. Diese Multiplikation gilt für die Beschreibung der Bandspreizung auf der digital modulierten Signalseite. Auf der logischen Seite ist die der Multiplikation entsprechende Operation die Addition modulo 2. Die Definition und Konstruktion der Codesequenzen wird auf der binären Seite durchgeführt.

Da in Direct-Sequence CDMA Systemen alle Teilnehmer zur gleichen Zeit im gleichen Frequenzband senden, sind für die weiteren Betrachtungen die Korrelationseigenschaften der digital modulierten Signale von Bedeutung. Eine Analyse dieser Eigenschaften findet entsprechend auf der Signalseite statt. Das aus der Verknüpfung von Daten-Bit und Code-Bit entstandene Bit wird im Modulator 7 PSK moduliert. Daher sind die Korrelationseigenschaften derart konstruierter Signale für die weitere Betrachtung von Bedeutung. PSK modulierte Signale lassen sich als Signalvektoren in der komplexen Ebene darstellen. Die mathematische Beschreibung von gegenseitigem Einfluss zwischen zwei Signalen erfolgt in der Nachrichtentechnik durch Bildung der Kreuzkorrelationsfunktion.

Wie bereits erwähnt, findet die Definition und Konstruktion der Codesequenzen auf der logischen, d.h. der binären Seite statt. Diese Sequenzen werden durch lineare Schieberegister mit Rückkopplung, sog. Linear Feedback Shift Register (LFSR), erzeugt. Ihre Generierung durch ein LFSR ist vorteilhaft durch Polynorne darstellbar. Ein LFSR mit n Schieberegistern besitzt $2^n$ mögliche Registerbelegungen. Da die Nullsequenz als Sequenz zur Bandspreizung unbrauchbar ist, gilt für die Periode N von so erzeugten Spread Spectrum Sequenzen die Ungleichung:

$$N \leq 2^n - 1$$

Zu den Eigenschaften von Schieberegistersequenzen zählt, dass verschiedene Phasen einer Sequenz durch dasselbe LFSR erzeugt werden können. Sequenzen mit maximaler Periode werden als M-Sequenzen bezeichnet (Periode: $N = 2^n - 1$, entspricht einem primitiven Polynom vom Grad n).

Eben diese M-Sequenzen besitzen entsprechend ihren Eigenschaften sehr gute gerade Autokorrelationseigenschaften. Um in einem Direct-Sequence CDMA System zur Anwendung zu gelangen, sind aber zudem gute Kreuzkorrelationseigenschaften erforderlich, da in solchen Systemen 1 alle Teilnehmer 4 zur gleichen Zeit im gleichen Frequenzband senden. Nicht-ideale Kreuzkorrelationseigenschaften bedingen somit zusätzliche Störungen, die möglichst gering ausfallen sollen. Vorzugsweise ist die gerade Kreuzkorrelationsfunktion zweier M-Sequenzen mindestens dreiwertig. Für spezielle Paare von M-Sequenzen gleicher Länge ist sie genau dreiwertig. Man spricht dann von sog. Preferred Pairs von M-Sequenzen.

Allgemein gilt, dass der maximale Nebenzipfel der geraden KKF (Kreuzkorrelationsfunktion) für Preferred Pairs kleiner ist als für alle anderen Paare von M-Sequenzen. Ein DS-CDMA System benötigt nun aber zusätzlich zu den guten Korrelationseigenschaften ein Code-Set ausreichender Größe, um auch eine entsprechende Anzahl von Teilnehmern 4 versorgen zu können. Hierbei gilt ganz grob die Faustregel, dass die Mächtigkeit des Code-Sets ungefähr dem Bandspreizfaktor entsprechen sollte. Einen ersten Ansatz zur Konstruktion solcher Code-Sets behandelt der folgende Abschnitt.

Das Prinzip der Maximal Connected Sets von M-Sequenzen beruht auf der Erweiterung des Prinzips der Preferred Pairs, um größere Sets von Sequenzen zu erhalten. Ein Maximal Connected Set von M-Sequenzen enthält $M_n$ Sequenzen, in denen alle Paare Preferred Pairs bilden. Es zeigt sich aber, dass $M_n \leq 6$ bleibt. Die Maximal Connected Sets eignen sich daher nur in Applikationen, in denen wenige Sequenzen mit exzellenten AKF- und KKF-Eigenschaften benötigt werden.

Ein weiteres Code-Set, das auf der Basis der Preferred Pairs entwickelt wurde, sind die nach R. Gold benannten Gold-Codes. Gold-Codes sind periodische Sequenzen, die große Sets bilden und gute Korrelationseigenschaften besitzen. Bei der Konstruktion der Gold-Codes stellt man im Vergleich zu den Preferred Pairs von M-Sequenzen fest, dass deren günstige gerade Kreuzkorrelationseigenschaften erhalten bleiben, allerdings zu Lasten ungünstigerer gerader Autokorrelationseigenschaften. Weiter gilt auch hier wiederum, dass die ungeraden Korrelationseigenschaften wesentlich ungünstiger ausfallen als die geraden.

Die gute Autokorrelation von sog. Barker-Code Sequenzen erleichtert die Aquisition und lässt eine gute Schätzung der Kanalimpulsantwort mit Hilfe eines Korrelationsempfängers zu. Gute Kreuzkorrelation der Sequenzen ist notwendig, um eine sichere Trennung der Benutzer durchführen zu können. Da zudem in Direct Sequence CDMA Systemen alle Teilnehmer zur gleichen Zeit im gleichen Frequenzband senden, bestimmen die Kreuzkorrelationen den Grad der zusätzlich entstehenden Störungen.

Weitere mögliche Code-Sets sind bspw. die Kasami-Codes und die Walsh-Codes.

In dem obigen Abschnitt wurden Code-Sets vorgestellt, die eine Konstruktion quasi-orthogonaler Signale mittels der Direct-Sequence Bandspreizung gestatten. Hierbei zeigt sich aber auch ein prinzipielles Problem der Direct-Sequence CDMA Systeme. Die Forderung nach idealen Korrelatonseigenschaften läuft derjenigen nach genügend großer Set-Größe entgegen. Es existieren keine Kollektive von SchieberegisterSequenzen mit idealen periodischen Korrelationseigenschaften. So sind an dieser Stelle Kompromisse notwendig. Während für den Bereich der Kommunikationssysteme in einem Kraftfahrzeug, insbesondere der HDR-PLC Systems, haben Gold-Codes sehr günstigste Eigenschaften, was das Verhältnis von Set-Größe zu Korrelationseigenschaften betrifft.

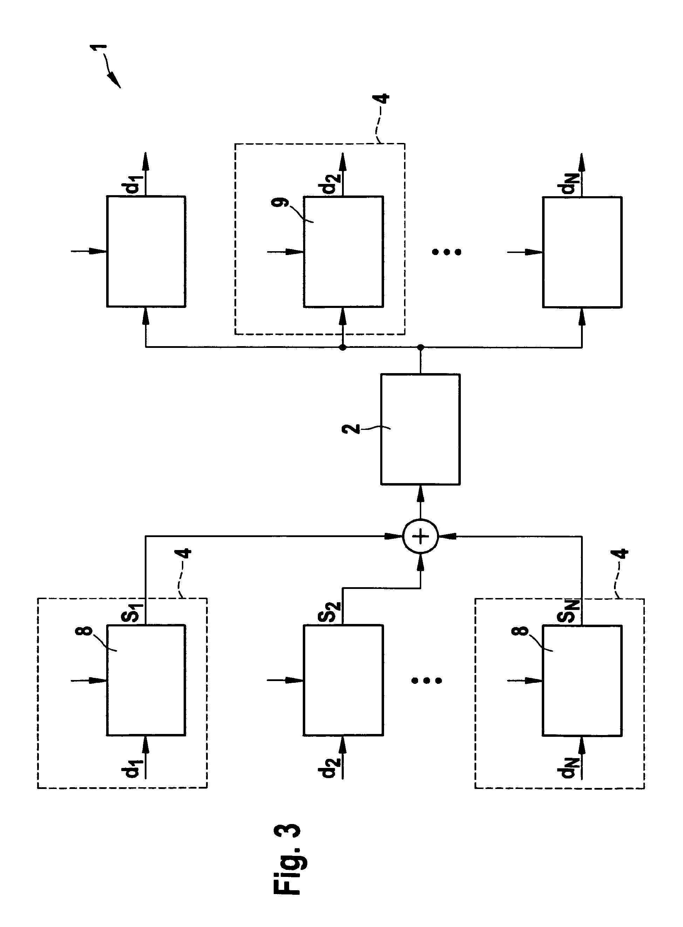

Das Schema eines FlexRay-Kommunikationssystems 1, das um ein Direct-Sequence CDMA System erweitert wurde, zeigt die Figur 3. Jeder Zweig auf der linken Seite entspricht einem Teilnehmer 4 des Systems 1. Zu ihm gehört der Datenstrom $d_i(t)$, die Codesequenz DS-i und der Sender i, der mit dem Bezugszeichen 8 bezeichnet ist und in dem die Bandspreizung mittels der Codesequenz DS-i durchgeführt wird. So wird z.B. der Datenstrom $d_1$ des Teilnehmers #1 im Sender #1 mit der Direct-Sequence Codesequenz #1 spektral gespreizt, in einem Empfänger 9 mit einem Duplikat dieser Sequenz wieder entspreizt und so die gesendeten Daten $d'_1$ detektiert. Eine Entspreizung durch eine andere Codesequenz ist nicht möglich, d.h. nur bei Kenntnis der im Sender verwendeten Codesequenz ist überhaupt eine Detektion prinzipiell durchführbar. Der verwendete Empfänger ist ein Korrelationsempfänger. So ein Korrelationsempfänger ist im bisherigen Transceiversystem von Teilnehmern 4 eines FlexRay-Systems ohnehin als Empfangsfilter in VHDL (VHSIC (Very High Speed Integrated Circuit) Hardware Description Language) vorhanden. Mit dieser Korrelation ist auch der Prozessgewinn der Bandspreizübertragung verbunden, denn im Idealfall wird das Rauschen um den Faktor des Prozessgewinns unterdrückt. Da alle Teilnehmer 4 zum gleichen Zeitpunkt im gleichen Frequenzband senden, erfolgt eine additive Überlagerung ihrer Signale im Kanal (vgl. Figur 3).

Nicht-ideale Kreuzkorrelationseigenschaften werden demnach zusätzliche Störungen verursachen. Der Kanal-Block 2 präsentiert die Powerline, d.h. die konditionierte Versorgungsleitung in ihrer Eigenschaft als Kommunikationskanal.

Als Alternative zu einem Korrelationsempfänger kann auch ein sog. SAW-TDL (Surface Acoustic Wave Tapped Delay Line)-Filter auf Empfängerseite zum decodieren der nach dem erfindungsgemäßen Verfahren übertragenen Daten eingesetzt werden. Durch die gleichzeitige Übertragung stören sich die Teilnehmer 4 gegenseitig. Zur Reduktion der sog. Mehrnutzerinterferenzen kann ein Mehrbenutzerdetektor eingesetzt werden. Der nachfolgend beschriebene Mehrbenutzerdetektor kann durch Einsatz von angezapften Verzögerungsleitungen für akustische Oberflächenwellen (Surface Acoustic Wave Tapped Delay Line - SAW-TDL) als Detektor realisiert werden.

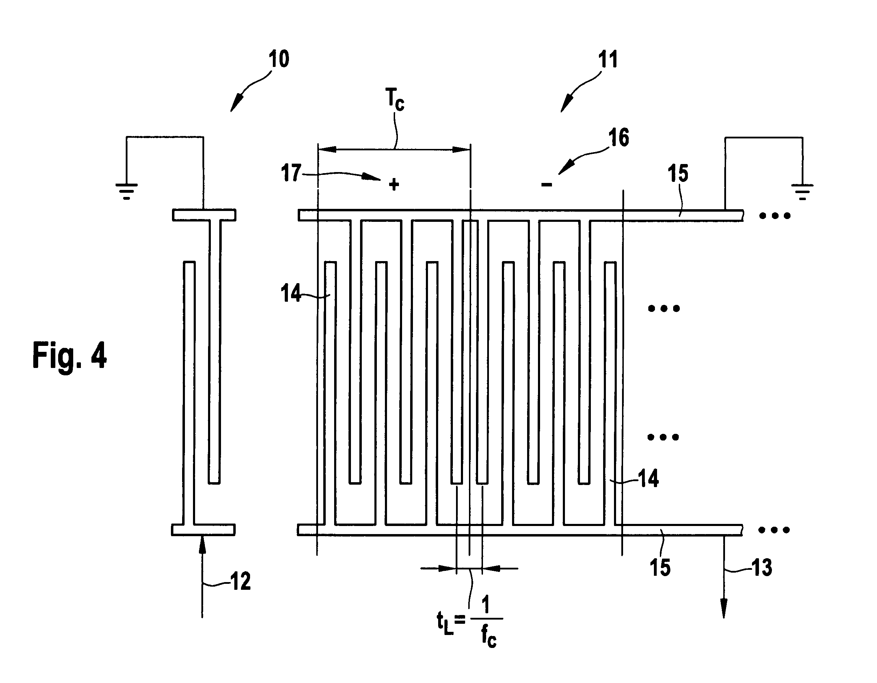

Bei der elektrischen Erzeugung akustischer Oberflächenwellen (OFW) und bei der Rückwandlung in elektrische Signale werden der piezoelektrische bzw. der reziproke piezoelektrische Effekt ausgenutzt. Aus diesem Grund verwendet man bei der Herstellung von Bauelementen für akustische Oberflächenwellen als Substratmaterialien Stoffe mit ausgeprägten piezoelektrischen Eigenschaften. Eine angezapfte Verzögerungsleitung für akustische Oberflächenwellen besteht entsprechend Figur 4 aus einem Eingangswandler 10, der das elektrische Eingangssignal 12 in eine akustische Oberflächenwelle umwandelt, und aus einem Ausgangswandler 11, der aus der akustischen Oberflächenwelle wieder ein elektrisches Signal 13 gewinnt.

Entsprechend Figur 4 erzeugt die vom Eingangswandler 10 ausgelöste akustische Welle an jedem Finger 14 des Ausgangswandlers 11 eine Spannung, die zur jeweiligen Fingerlänge proportional ist. Wenn die Anschlussfolge der Finger 14 an die Sammelschiene 15 geändert wird, kehrt sich das Vorzeichen der Spannung, die jedes Fingerpaar dieser Gruppe an den Sammelschienen 15 hervorruft, um. Eine Fingergruppe wird als "Anzapfung" 16 bezeichnet. Je weiter ein Finger 14 des Ausgangswandlers 11 vom Eingangswandler 10 entfernt ist, umso später tritt das vom Eingangswandler 10 kommende Signal auf. Zu jedem Zeitpunkt summieren sich an den Sammelschienen 15 die Spannungen der einzelnen Finger 14 mit dem einprogrammierten Vorzeichen 17 auf. Die Impulsantwort des Bauteils entspricht einem sinusförmigen Signal mit den einprogrammierten Phasensprüngen.

Die Baugröße der SAW-TDLs wird durch den Fingerabstand, die Anzahl der Finger 14 und der Mittenfrequenz $f_c$ des Informationssignals bestimmt. Die Ausbreitungsgeschwindigkeit der Oberflächenwellen liegt bei 3000...4000 m/s. Somit ergibt sich für Mittenfrequenzen von etwa 10 MHz bis zu mehreren hundert MHz eine Wellenlänge der Oberflächenwelle von etwa 3 $\mu$m bis 300 $\mu$m. Die üblichen SAW-Filter sind, wie auch Digitalfilter, so genannte Transversalfilter, die statt aus Einzelbauelementen Spule, Kapazität und Widerstand aus Verzögerungsgliedern, Multiplizierern und Summierern bestehen. Diese Bauelemente können als einfach zu handhabende und preisgünstige Matched Filter für pseudozufällig phasensprungmodulierte Sinussignale eingesetzt werden. SAW-TDLs sind analoge, passive Filter. Mit Hilfe einer angezapften Verzögerungsleitung, eines Gleichrichters und eines Schwellwertdetektors kann auf einfache Weise eine präzise Systemsynchronisation bewerkstelligt werden.

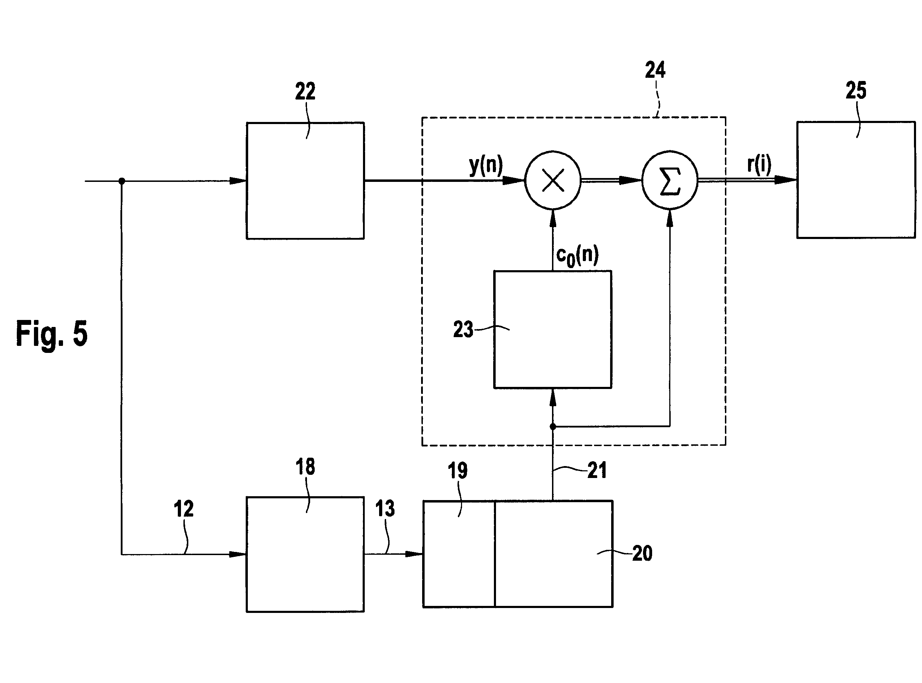

Den Aufbau einer Empfängerstruktur bestehend aus dem SAW-TDLs zeigt Figur 5. Zur vereinfachten Darstellung ist ein Einbenutzerdetektor mit einem SAW-TDL 18 (vgl. Fig. 4) dargestellt Für einen Mehrbenutzerdetektor sind entsprechend weitere SAW-TDLs der Struktur hinzuzufügen.

Die Verzögerungsleitung (bzw. der SAW-TDL) 18 hat Anzapfungen 16 im "zeitlichen" Abstand der Taktfrequenz der Codesequenz $1/Tc$. Das Ausgangssignal 13 der angezapften Verzögerungsleitung hat im Allgemeinen eine sehr geringe Amplitude. Nur dann, wenn die Phasensprünge des Empfangssignals 12 des gerade in der Verzögerungsleitung gespeicherten Signalausschnitts zu dem in der Verzögerungsleitung einprogrammierten Ausschnitt der Codesequenz passen, wird die Amplitude des Ausgangssignals 13 groß. Diese maximale Amplitude des Ausgangssignals 13 tritt in Zeitabständen $T_b = N \cdot T_c$ auf, wobei N die Periodenlänge der Codesequenz ist. Das in einem Gleichrichter 19 gleichgerichtete und einem Schwellwertdetektor 20 zugeführte Ausgangssignal 13 der angezapften Verzögerungsleitung (SAW-TDL) 18 kann als digitales Signal interpretiert werden und wird als Setzimpuls 21 bezeichnet. Zum einen erhält man dadurch eine genaue Information über den Zeitpunkt der Hauptspitze, d.h. dem korrekten Abtastzeitpunkt, zum anderen wird der Setzimpuls zur Synchronisation des Empfängertaktes genutzt Anhand der gewonnenen Synchronisationsinformation erfolgt eine synchrone Multiplikation des Eingangssignals 12, bzw. nach Verarbeitung des Signals 12 in einem Mischer und A/D-Wandler 22 das Eingangssignal $y(n)$, mit der Codesequenz. $c(n)$. Ein setzbarer Pseudozufallsgenerator zum Erzeugen der Codes $c_i(n)$ ist mit dem Bezugszeichen 23 und der Korrelator in seiner Gesamtheit mit dem Bezugszeichen 24 bezeichnet. Der Demodulator ist mit dem Bezugszeichen 25 bezeichnet.

Nachfolgend wird die Aquisition und das Tracking in Direct Sequence CDMA Systemen beschrieben. Mit Aquisition bezeichnet man im Empfänger den Vorgang der Anfangssynchronisation auf das Signal des Senders. Für alle CDMA Systeme ist dies gleichbedeutend mit der Herstellung der Synchronität zwischen dem Takt der Codesequenz im Sender und der im Empfänger. Nach dieser Anfangssynchronisation sind Maßnahmen notwendig, die den eingestellten Codetakt konstant halten. Diesen Vorgang bezeichnet man als Tracking. Da beide Aufgaben mehr dem System-Managemant zuzurechnen sind, sollen hier nur kurz die aus der Literatur an sich bekannten Prinzipien angegeben werden.

Die bekanntesten Aquisifionseinrichtungen lassen sich grob unterteilen in:

-    Aquisition mit serieller Suche,

- Aquisition mit sequentieller Suche, und

- Aquisition mit Matched Filter.

In all diesen Aquisitionsverfahren wird das Empfangssignal mit einer lokal erzeugten Codesequenz multipliziert. Ist die relative Verschiebung zwischen Sender- und Empfänger-Codesequenz größer als die einfache Chipdauer $T_C$, so ist das Signal nach einer Schmalbandfilterung durch das Rauschen bestimmt, da es gespreizt bleibt. Ist diese relative Verschiebung jedoch kleiner als $T_C$, so steigt die Nutzsignalleistung am Filterausgang an und ein Schwellwertentscheider detektiert das Vorhandensein eines Signals. Eine andere Möglichkeit besteht in der Benutzung unterschiedlich langer Codesequenzen zur Aquisition und während des eigentlichen Übertragungsvorganges.

Zum Tracking werden in der Regel die zwei folgenden Prinzipien benutzt:

- Delay Locked Loop (DLL), und

- Tau-dither Loop (TDL)

Es kann davon ausgegangen werden, dass in dem erfindungsgemäßen Kommunikationssystem 1 die Bitfehlerwahrscheinlichkeit bei K Teilnehmern 4 größer ist als bei nur einem einzigen, wenn die durch die übrigen Teilnehmer 4 verursachten Störungen näherungsweise als additiver Gaußscher Rauschprozess interpretiert werden können.

Die Erweiterung hin zu einem Direct-Sequence CDMA System bietet für eine Anwendung im Automotive PLC-Bereich unter Nutzung des FlexRay-Protokolls wesentliche Vorteile:

- In Direct-Sequence CDMA Systemen senden mehrere Teilnehmer zur gleichen Zeit im gleichen Frequenzband, d.h. unter Nutzung eines identischen Transceivers, Dies ist möglich, weil die Unterscheidbarkeit der Signale der einzelnen Teilnehmer nicht durch Orthogonalität bezüglich der Zeit oder Frequenz gegeben ist, sondern durch die zur Bandspreizung verwendeten Codesequenzen. Zudem wird im Gegensatz zu FDMA Systemen nur eine Trägerfrequenz für alle Teilnehmer benötigt.

- Man erhält durch die statistische Verwürfelung der von allen Teilnehmern hervorgerufenen Störungen Mittelungseffekte bei der Betrachtung der Störverhältnisse, weil alle Teilnehmer im gleichen Frequenzband senden. Das hat die Konsequenz, dass die durch die übrigen Teilnehmer hervorgerufene Störung im Falle eines Direct-Sequence CDMA Systeme niedriger ist als bei den klassischen Verfahren.

- Langsame Verminderung (sog. Degradation) der Übertragungsqualität bei steigender Teilnehmerzahl. Direct-Sequence CDMA Systeme sind Interferencelimitiert, d.h. die Übertragungsqualität wird im wesentlichen durch die gegenseitigen Störungen der einzelnen Teilnehmer aufgrund der nicht idealen Kreuzkorrelationseigenschaften der Bandspreizsequenzen bestimmt. Diese Störungen und die im vorigen Punkt angesprochenen Mittelungseffekte ergeben keine abrupte, sondern eine langsame Degradation der Übertragungsverhältnisse. In einem Direct-Sequence CDMA System kann also immer noch ein Teilnehmer mehr aufgenommen werden, dessen störender Einfluss sich dann auf alle übrigen Teilnehmer verteilt.

Diese Punkte bewirken insgesamt eine erhöhte spektrale Effizienz für Direct-Sequence CDMA Systeme im Vergleich zu dem klassischen FlexRay-TDMA-System.

- Direct-Sequence CDMA Systeme sind unempfindlich gegenüber frequenzselektivem Fading. Durch die Breitbandigkeit des Systems bleibt die Energie im Gesamtband trotz kurzzeitiger Pegeleinbrüche in Teilbändern annähernd konstant

- Möglichkeit der Koexistenz mit bereits vorhandenen analogen Systemen, bei reduzierter Kapazität beider Systeme. Weil durch die Spreizung die Energie eines Datensignals über einen sehr großen spektralen Bereich verteilt wird, ist der Anteil, der in einem analogen Schmalbandkanal als Störung zu liegen kommt, für diese analogen Systeme akzeptabel.

- Und schließlich eine synchrone Datenübertragung durch Subsysteme.

Obige Punkte sind wesentliche Vorteile von Direct-Sequence CDMA Systemen gegenüber den klassischen Systemen hinsichtlich Frequenzökonomnie, System-Management und Übertragungsqualität.

**Patentansprüche**

1. Verfahren zum Übertragen von Daten eines Datenstroms d(t) über ein Kommunikationsmedium (2) eines Kommunikationssystems (1) in Zeitschlitzen von sich wiederholenden Kommunikationszyklen, wobei die Daten des Datenstroms d(t) vor dem Senden mittels einer bestimmten Codesequenz c(t) spektral gespreizt und die gespreizten Daten dann in den Zeitschlitzen der sich wiederholenden Kommunikationszyklen übertragen werden, wobei die gespreizten Daten s(t) gemäß einer FlexRay-Protokollspezifikation, bei der jeder Kommunikationszyklus in einen statischen Teil und in einen dynamischen Teil unterteilt ist und bei der Echtzeit-relevante und zeitkritische Nachrichten in dem statischen Teil und Daten mit geringeren Echtzeit-Anforderungen in dem dynamischen Teil übertragen werden, über eine Energieversorgungsleitungsstruktur des Kommunikationssystems (1) übertragen werden, wobei die Energieversorgungsleitungsstruktur sowohl zur Energieversorgung der Teilnehmer (4) des Kommunikationssystems (1) als auch zur Datenübertragung zwischen den Teilnehmern (4) dient.

2. Verfahren nach Anspruch 1, **dadurch gekennzeichnet, dass** mehrere Teilnehmer (4) des Kommunikationssystems (1) jeweils Daten eines Datenstroms $d_i(t)$ übertragen und die durch die Teilnehmer (4) zu übertragenden Daten jeweils mit unterschiedlichen Codesequenzen $c_i(t)$ spektral gespreizt werden.

3. Verfahren nach Anspruch 2, **dadurch gekennzeichnet, dass** die von den Teilnehmern (4) zu übertragenden gespreizten Daten $s_i(t)$ zeitgleich in einem identischen Frequenzband übertragen werden.

4. Verfahren nach Anspruch 2 oder 3, **dadurch gekennzeichnet, dass** mittels der unterschiedlichen Codesequenzen $c_i(t)$ der sendenden Teilnehmer (4) othogonale bzw. quasi-orthogonale Datensignale $s_i(t)$ erzeugt werden.

5. Verfahren nach einem der Ansprüche 1 bis 4, **dadurch gekennzeichnet, dass** die zu übertragenden Daten mittels eines Direct-Sequence-Bandspreizverfahrens gespreizt werden.

6. Verfahren nach einem der Ansprüche 1 bis 5, **dadurch gekennzeichnet, dass** die Codesequenzen $c_i(t)$ mittels linearer Schieberegister mit Rückkopplung erzeugt werden.

7. Teilnehmer (4) eines Kommunikationssystems (1) zur Übertragung von Daten eines Datenstroms d(t) in Zeitschlitzen von sich wiederholenden Kommunikationszyklen, das Kommunikationssystem (1) umfassend ein Kommunikationsmedium (2), den Teilnehmer (4) und mindestens einen weiteren Teilnehmer (4), wobei der Teilnehmer (4) zum Zwecke der Datenübertragung an dem Kommunikationsmedium (2) angeschlossen ist, wobei der Teilnehmer (4) Mittel (5, 6, 7) zur spektralen Spreizung der Daten des Datenstroms d(t) vor dem Senden mittels einer bestimmten Codesequenz c(t) und Mittel zum Senden der gespreizten Daten s(t) in den Zeitschlitzen der sich wiederholenden Kommunikationszyklen aufweist, wobei die Sendemittel derart ausgebildet sind, dass sie die gespreizten Daten s(t) gemäß einer FlexRay-Protokollspezifikation, bei der jeder Kommunikationszyklus in einen statischen Teil und in einen dynamischen Teil unterteilt ist und bei der Echtzeit-relevante und zeitkritische Nachrichten in dem statischen Teil und Daten mit geringeren Echtzeit-Anforderungen in dem dynamischen Teil übertragen werden, über eine Energieversorgungsleitungsstruktur des Kommunikationssystems (1) übertragen, wobei die Energieversorgungsleitungsstruktur sowohl zur Energieversorgung der Teilnehmer (4) des Kommunikationssystems (1) als auch zur Datenübertragung zwischen den Teilnehmern (4) dient.

8. Teilnehmer (4) nach Anspruch 7, **dadurch gekennzeichnet, dass** der Teilnehmer Mittel zum Empfangen der gespreizten Daten s(t) in den Zeitschlitzen der sich wiederholenden Kommunikationszyklen und Mittel zur Entspreizung der empfangenen gespreizten Daten s(t) mittels einer bestimmten Codesequenz c(t) aufweist, wobei die Codesequenz c (t) zum Entspreizen abhängig ist von der zur Spreizung verwendeten Codesequenz c(t).

9. Teilnehmer (4) nach Anspruch 7 oder 8, **dadurch gekennzeichnet, dass** der Teilnehmer (4) zur Ausführung von sämtlichen Schritten eines Verfahrens nach einem der Ansprüche 2 bis 6 ausgebildet ist.

10. Kommunikationssystem (1) zur Übertragung von Daten eines Datenstroms d(t) in Zeitschlitzen von sich wiederholenden Kommunikationszyklen, umfassend ein Kommunikationsmedium (2) mit mehreren daran angeschlossenen Teilnehmern (4), wobei sendende Teilnehmer (4) des Kommunikationssystems (1) Mittel (5, 6, 7) zur spektralen Spreizung der Daten des Datenstroms d(t) vor dem Senden mittels einer bestimmten Codesequenz c(t) und Mittel zum Senden der gespreizten Daten s(t) in den Zeitschlitzen der sich wiederholenden Kommunikationszyklen aufweisen, wobei das Kommunikationssystem (1) eine Energieversorgungsleitungsstruktur aufweist, wobei die Energieversorgungsleitungsstruktur sowohl zur Energieversorgung der Teilnehmer (4) des Kommunikationssystems (1) als auch zur Datenübertragung zwischen den Teilnehmern (4) dient, und dass die Sendemittel der sendenden Teilnehmer (4) derart ausgebildet sind, dass sie die gespreizten Daten s(t) gemäß einer FlexRay-Protokollspezifikation, bei der jeder Kommunikationszyklus in einen statischen Teil und in einen dynamischen Teil unterteilt ist und bei der Echtzeit-relevante und zeitkritische Nachrichten in dem statischen Teil und Daten mit geringeren Echtzeit-Anforderungen in dem dynamischen Teil übertragen werden, über die Energieversorgungsleitungsstruktur des Kommunikationssystems (1) übertragen.

11. Kommunikationssystem (1) nach Anspruch 10, **dadurch gekennzeichnet, dass** die Teilnehmer (4) des Kommunikationssystems (1) zur Ausführung von sämtlichen Schritten eines Verfahrens nach einem der Ansprüche 2 bis 6 ausgebildet sind.

## Claims

1. Method for transmitting data in a data stream d(t) using a communication medium (2) in a communication system (1) in time slots from recurring communication cycles, wherein the data in the data stream d(t) are subjected to spectral spreading by means of a particular code sequence c(t) prior to their being sent and the spread data are then transmitted in the time slots of the recurring communication cycles, wherein the spread data s(t) are transmitted, on the basis of a FlexRay protocol specification in which each communication cycle is divided into a static portion and a dynamic portion and in which real-time-relevant and time-critical messages are transmitted in the static portion and data having lower real-time requirements are transmitted in the dynamic portion, using a power supply line structure of the communication system (1), wherein the power supply line structure is used both for supplying power to the subscribers (4) in the communication system (1) and for transmitting data between the subscribers (4).

2. Method according to Claim 1, **characterized in that** a plurality of subscribers (4) in the communication system (1) each transmit data in a data stream $d_i(t)$, and the data to be transmitted by the subscribers (4) are each subjected to spectral spreading with different code sequences $c_i(t)$.

3. Method according to Claim 2, **characterized in that** the spread data $s_i(t)$ to be transmitted by the subscribers (4) are transmitted simultaneously in an identical frequency band.

4. Method according to Claim 2 or 3, **characterized in that** the different code sequences $c_i(t)$ of the sending subscribers (4) are used to produce orthogonal or quasi-orthogonal data signals $s_i(t)$.

5. Method according to one of Claims 1 to 4, **characterized in that** the data to be transmitted are spread by means of a direct sequence band spreading method.

6. Method according to one of Claims 1 to 5, **characterized in that** the code sequences $c_i(t)$ are produced by means of a linear feedback shift register.

7. Subscriber (4) in a communication system (1) for transmitting data in a data stream d(t) in time slots from recurring communication cycles, the communication system (1) comprising a communication medium (2), the subscriber (4) and at least one further subscriber (4), wherein the subscriber (4) is connected to the communication medium (2) for the purpose of the data transmission, wherein the subscriber (4) has means (5, 6, 7) for subjecting the data in the data stream d(t) to spectral spreading by means of a particular code sequence c(t) prior to their being sent and means for sending the spread data s(t) in the time slots of the recurring communication cycles, wherein the transmission means are designed such that they transmit the spread data s(t), on the basis of a FlexRay protocol specification in which each communication cycle is divided into a static portion and a dynamic portion and in which real-time-relevant and time-critical messages are transmitted in the static portion and data having lower real-time requirements are transmitted in the dynamic portion, using a power supply line structure of the communication system (1), wherein the power supply line structure is used both for supplying power to the subscribers (4) in the communication system (1) and for transmitting data between the subscribers (4).

8. Subscriber (4) according to Claim 7, **characterized in that** the subscriber has means for receiving the spread data s(t) in the time slots of the recurring communication cycles and means for despreading the received spread data s(t) by means of a particular code sequence c(t), wherein the code sequence c(t) for despreading is dependent on the code sequence c(t) used for spreading.

9. Subscriber (4) according to Claim 7 or 8, **characterized in that** the subscriber (4) is designed to carry out all the steps of a method according to one of Claims 2 to 6.

10. Communication system (1) for transmitting data in a data stream d(t) in time slots from recurring communication cycles, comprising a communication medium (2) having a plurality of subscribers (4) connected thereto, wherein sending subscribers (4) in the communication system (1) have means (5, 6, 7) for subjecting the data in the data stream d(t) to spectral spreading by means of a particular code sequence c(t) prior to their being sent and means for sending the spread data s(t) in the time slots of the recurring communication cycles, wherein the communication system (1) has a power supply line structure, wherein the power supply line structure is used both for supplying power to the subscribers (4) in the communication system (1) and for transmitting data between the subscribers (4), and wherein the transmission means of the sending subscribers (4) are designed such that they transmit the spread data s(t), on the basis of a FlexRay protocol specification in which each communication cycle is divided into a static portion and a dynamic portion and in which real-time-relevant and time-critical messages are transmitted in the static portion and data having lower real-time requirements are transmitted in the dynamic portion, using the power supply line structure of the communication system (1).

11. Communication system (1) according to Claim 10, **characterized in that** the subscribers (4) in the communication system (1) are designed to carry out all the steps of a method according to one of Claims 2 to 6.

**Revendications**

1. Procédé destiné à transmettre des données d'un flux de données d(t) par l'intermédiaire d'un support de communication (2) d'un système de communication (1) dans des tranches de temps de cycles de communication répétitifs, les données du flux de données d(t) étant étalées spectralement avant l'émission au moyen d'une séquence de code déterminée c(t) et les données étalées étant ensuite transmises dans les tranches de temps des cycles de communication répétitifs, dans lequel les données étalées s(t) sont transmises conformément à une spécification du protocole FlexRay selon laquelle chaque cycle de communication est subdivisé en une partie statique et une partie dynamique et selon laquelle des messages relevant du temps réel et critiques du point de vue du temps sont transmis dans la partie statique et des données présentant des exigences de temps réel' plus faibles sont transmises dans la partie dynamique, par l'intermédiaire d'une structure conductrice d'alimentation en énergie du système de communication (1), la structure conductrice d'alimentation en énergie étant à la fois destinée à alimenter en énergie les dispositifs utilisateurs (4) du système de communication (1) et à transmettre des données entre les dispositifs utilisateurs (4).

2. Procédé selon la revendication 1, **caractérisé en ce qu'**une pluralité de dispositifs utilisateurs (4) du système de communication (1) transmettent respectivement des données d'un flux de données $d_i(t)$ et les données devant être transmises par l'intermédiaire des dispositifs utilisateurs (4) sont respectivement spectralement étalées avec différentes séquences de code $c_i(t)$.

3. Procédé selon la revendication 2, **caractérisé en ce que** les données $s_i(t)$ étalées devant être transmises par les dispositifs utilisateurs (4) sont transmises simultanément dans une même bande de fréquences.

4. Procédé selon la revendication 2 ou 3, **caractérisé en ce que** des signaux de données orthogonaux ou quasi-orthogonaux $s_i(t)$ sont générés au moyen des différentes séquences de code $c_i(t)$ des dispositifs utilisateurs (4) émetteurs.

5. Procédé selon l'une quelconque des revendications 1 à 4, **caractérisé en ce que** les données à transmettre sont étalées au moyen d'un procédé d'étalement de bande à séquence directe.

6. Procédé selon l'une quelconque des revendications 1 à 5, **caractérisé en ce que** les séquences de code $c_i(t)$ sont générées par rétroaction au moyen de registres à décalage linéaires.

7. Dispositif utilisateur (4) d'un système de communication (1) destiné à transmettre des données d'un flux de données d(t) dans des tranches de temps de cycles de communication répétitifs, le système de communication (1) comprenant un support de communication (2), le dispositif utilisateur (4) et au moins un autre dispositif utilisateur (4), le dispositif utilisateur (4) étant relié au support de communication (2) aux fins de la transmission de données, le dispositif utilisateur (4) comprenant des moyens (5, 6, 7) destinés à étaler spectralement des données du flux de données d(t) avant l'émission au moyen d'une séquence de code déterminée c(t) et des moyens destinés à émettre les données étalées s(t) dans les tranches de temps des cycles de communication répétitifs dans lequel les moyens d'émission sont conçus de manière à transmettre les données étalées s(t) conformément à une spécification du protocole FlexRay selon laquelle chaque cycle de communication est subdivisé en une partie statique et une partie dynamique et selon laquelle des messages relevant du temps réel et critiques du point de vue du temps sont transmis dans la partie statique et des données présentant des exigences de temps réel plus faibles sont transmises dans la partie dynamique, par l'intermédiaire d'une structure conductrice d'alimentation en énergie du système de communication (1), la structure conductrice d'alimentation en énergie étant à la fois destinée à alimenter en énergie les dispositifs utilisateurs (4) du système de communication (1) et à transmettre des données entre les dispositifs utilisateurs (4).

8. Dispositif utilisateur (4) selon la revendication 7, **caractérisé en ce que** le dispositif utilisateur comprend des moyens destinés à recevoir les données étalées s(t) dans les tranches de temps des cycles de communication répétitifs et des moyens destinés à désétaler les données étalées reçues s(t) au moyen d'une séquence de code déterminée c(t), la séquence de code c(t) destinée au désétalement dépendant de la séquence de code c(t) utilisée pour l'étalement.

9. Dispositif utilisateur (4) selon la revendication 7 ou 8, **caractérisé en ce que** le dispositif utilisateur (4) est conçu pour exécuter la totalité des étapes d'un procédé selon l'une quelconque des revendications 2 à 6.

10. Système de communication (1) destiné à transmettre des données d'un flux de données d(t) dans des tranches de temps de cycles de communication répétitifs, comprenant un support de communication (2) comportant une pluralité de dispositifs utilisateurs (4) reliés à celui-ci, les dispositifs utilisateurs émetteurs (4) du système de communication (1) comprenant des moyens (5, 6, 7) destinés à étaler spectralement les données du flux de données d(t) avant l'émission au moyen d'une séquence de code déterminée c(t) et des moyens destinés à émettre les données étalées s(t) dans les tranches de temps des cycles de communication répétitifs, dans lequel le système de communication (1) comprend une structure conductrice d'alimentation en énergie, la structure conductrice d'alimentation en énergie étant à la fois destinée à alimenter en énergie les dispositifs utilisateurs (4) du système de communication (1) et à transmettre des données entre les dispositifs utilisateurs (4), et dans lequel les moyens d'émission des dispositifs utilisateurs émetteurs (4) sont conçus de manière à transmettre les données étalées s(t) conformément à une spécification du protocole FlexRay selon laquelle chaque cycle de communication est subdivisé en une partie statique et une partie dynamique et selon laquelle des messages relevant du temps réel et critiques du point de vue du temps sont transmis dans la partie statique et des données présentant des exigences de temps réel plus faibles sont transmises dans la partie dynamique par l'intermédiaire de la structure conductrice d'alimentation en énergie du système de communication (1).

11. Système de communication (1) selon la revendication 10, **caractérisé en ce que** les dispositifs utilisateurs (4) du système de communication (1) sont conçus pour exécuter la totalité des étapes d'un procédé selon l'une quelconque des revendications 2 à 6.

**Fig. 1**

d(t)

6

7

s(t)

c(t)

5

**Fig. 2**

4

EP 2 127 116 B1

Fig. 3

Fig. 4

EP 2 127 116 B1

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10142409
- DE 10142408
- DE 102004008910
- DE 10142410